# EUROPÄISCHE PATENTSCHRIFT

(11) **EP 1 595 094 B1**
(45) Veröffentlichungstag und Bekanntmachung des Hinweises auf die Patenterteilung: **19.09.2007**
(21) Anmeldenummer: 04712535.6
(22) Anmeldetag: 19.02.2004
(51) Int. Cl.: F16L 55/165, E21B 7/30

(54) **VERFAHREN ZUM AUSWECHSELN VON ROHREN**
METHOD FOR REPLACING PIPES
PROCEDE POUR CHANGER DES TUYAUX

(30) Priorität: 19.02.2003 DE 10306965
(43) Veröffentlichungstag der Anmeldung: 16.11.2005
(73) Patentinhaber: Schwert, Siegfried, 14195 Berlin (DE)
(72) Erfinder: SCHWERT, Siegfried, 14195 Berlin (DE); HÜTTEMANN, Andreas, 12157 Berlin (DE); ROSE, Michael, 16552 Schildow (DE)
(74) Vertreter: Pfenning, Meinig & Partner GbR
(86) Internationale Anmeldenummer: PCT/EP2004/001602
(87) Internationale Veröffentlichungsnummer: WO 2004/074732

(56) Entgegenhaltungen:
- EP-A- 0 251 607
- EP-A- 0 418 720
- DE-A- 3 801 472
- DE-C- 3 801 824
- US-A- 4 505 302

## Beschreibung

Die Erfindung betrifft ein Verfahren nach dem Oberbegriff des Anspruchs 1, wie es beispielsweise in der US 4,505,302 A gezeigt ist.

Aus der DE 35 26 193 A1 ist bekannt, erneuerungsbedürftige erdverlegte Rohrleitungen ohne Ausgrabung in der Weise durch eine im Außendurchmesser praktisch gleich große oder sogar noch größere neue Rohrleitung zu ersetzen, dass die alte Rohrleitung durch eine hindurchgezogene Maulwurfsvorrichtung von innen her zerschlagen und aufgebrochen wird und bis auf den Au-ßendurchmesser der an die Maulwurfsvorrichtung angehängten neuen Rohrleitung aufgeweitet wird. Die alte Rohrleitung besteht hierbei aus einem sprödbrechenden Material wie Grauguss, PVC, Asbestzement, unbewehrter Beton oder Steinzeug, während für die neue Rohrleitung zumeist Kunststoff verwendet wird. Die Scherben der zerschlagenen alten Rohrleitung werden zwar zunächst aus dem Weg der neuen Rohrleitung herausgedrückt. Schwerkraftbedingt fallen die Scherben dann aber wieder auf die neu eingezogene Rohrleitung. Der zuvor verdichtete Boden entspannt sich später wieder und übt somit Kräfte auf die das neue Rohr umgebenden Scherben aus, die damit punktförmig auf das neue Rohr wirken. Diese Druckkräfte aus Punktbelastungen werden nach Inbetriebnahme der neuen Rohrleitung noch durch deren Innendruck überlagert. Da die Scherben scharfe und spitze Kanten haben, besteht die große Gefahr, dass sie die neue Rohrleitung beschädigen und deren Lebensdauer verkürzen.

Um diesem Mangel abzuhelfen, wird in der DE 36 03 238 A1 ein Verfahren zur Erneuerung von Abwasserleitungen offenbart, bei dem ein vibrierender Hammerkopf durch ein bestehendes Abwasserrohr hindurchgezogen wird, der dabei das Rohr zerbricht, die entstehenden Rohrbruchstücke in den umgebenden Boden presst und unmittelbar hinter sich ein neues Rohr einzieht, wobei, um das neue Rohr während des Einziehens und auch im späteren Betrieb vor den Bruchstücken des alten Rohres zu schützen, zusammen mit dem Hammerkopf um das neue Rohr verteilt angeordnete Metallbänder eingezogen werden. Dieses Verfahren hat jedoch den Nachteil, dass nicht nur das neue Rohr, sondern auch die Metallbänder über die gesamte Strecke zwischen den beiden Gruben eingezogen werden müssen und daher eine erhebliche Zugkraft aufgebracht oder der Abstand zwischen den Gruben verkürzt werden muss. Weiterhin können sich die Metallbänder gegenseitig verschieben, so dass die Schutzhülle nicht mehr geschlossen ist und die Möglichkeit des Eindringens von Rohrbruchstücken gegeben ist. Da die Lebensdauer der Rohre üblicherweise mehrere Jahrzehnte beträgt, müssen auch die Metallbänder entsprechend lange ihre Schutzfunktion ausüben. Das bedeutet, dass sie aus korrosionsfestem Material bestehen müssen und daher hohe Kosten verursachen.

Es ist daher die Aufgabe der vorliegenden Erfindung, ein Verfahren zum Auswechseln im Erdreich verlegter Rohre im Zuge einer Rohrleitung, bei dem im Bereich zwischen einer Einziehbaugrube und einer Zielbaugrube ein altes Rohr aus sprödbrechendem Material von innen her zerbrochen und in das umgebende Erdreich gedrückt und ein neues Rohr an dessen Stelle eingezogen wird, indem durch eine gemeinsame Ziehvorrichtung eine Schneidvorrichtung mit einem Aufweitkopf als Brechwerkezug und diesem nachfolgend das neue Rohr aus der Einziehbaugrube bis zur Zielbaugrube gezogen werden, wobei gleichzeitig mit dem neuen Rohr eine dieses umgebende Schutzhülle gegen mechanische Einwirkungen aus dem Erdreich eingezogen wird, anzugeben, bei dem das Einbringen der Schutzhülle im Wesentlichen ohne Erhöhung der Zugkraft erfolgt und die Schutzhülle dauerhaft geschlossen bleibt sowie aus kostengünstigen Materialien bestehen kann.

Diese Aufgabe wird erfindungsgemäß durch ein Verfahren mit den Merkmalen des Anspruchs 1 gelöst. Vorteilhafte Weiterbildungen des erfindungsgemäßen Verfahrens ergeben sich aus den Unteransprüchen.

Dadurch, dass als Schutzhülle ein Schlauch verwendet wird und dass während des Ziehvorgangs der Zwischenraum zwischen der Außenwand des neuen Rohres und der Innenwand des Schlauches mit fließfähigem Material zur Bildung eines das neue Rohr vor mechanischen Einwirkungen aus dem Erdreich schützenden Mantels gefüllt wird, lässt sich die Schutzhülle wesentlich einfacher einbringen und, da sie einteilig ist, kann sie sich auch nicht öffnen. Das fließfähige Material kann sich vorzugsweise nach Beendigung des Ziehvorgangs durch Abbinden verfestigen und ist beispielsweise eine Bentonitsuspension gegebenenfalls mit einem Zementzusatz, eine zementgebundene Stützflüssigkeit oder ein Kunststoff sein, welche korrosionsfest sind und kostengünstig erhalten werden können. Es kann jedoch auch ein Schlauch verwendet werden, der aus einer Substanz besteht oder eine Innenbeschichtung aus einer Substanz aufweist, die bei Zuführung des fließfähigen Materials irreversible aufquillt und sich verfestigt, wobei das fließfähige Material vorzugsweise Wasser ist.

Zweckmäßig werden das eine Ende des Schlauches in der Einziehbaugrube und das andere Ende des Schlauches hinter dem Aufweitkopf befestigt, wobei es vorteilhaft ist, wenn der Schlauch zusammengelegt zwischen dem Aufweitkopf und dem einzuziehenden neuen Rohr angeordnet und während des Ziehvorgangs von diesem Vorrat abgezogen wird. Es ist zweckmäßig, wenn das fließfähige Material von der Zielbaugrube aus, d.h. entgegen der Ziehrichtung zugeführt wird. Dazu wird ein für die Zuführung des fließfähigen Materials verwendeter Füllschlauch während des Ziehvorgangs zur Zielbaugrube gezogen, wobei der in die Zielbaugrube gezogene Teil des Füllschlauchs auf einer Schlauchwinde mit Drehdurchführung aufgewickelt werden kann.

Bevorzugt ist das neue Rohr auf der Außenseite mit Abstandshaltern versehen, die einen weitgehend gleichmäßigen Abstand zwischen dem Rohr und der Innenwand des Schlauches sicherstellen. Für diesen Fall besteht auch die Möglichkeit, dass das fließfähige Material von der Einziehbaugrube her in den Zwischenraum eingeführt wird. Dies kann durch direkte Einführung, durch mit dem neuen Rohr mitgezogene Zuführschläuche oder durch ein selbst als Abstandshalter dienendes biegsames Rohr erfolgen.

Die Erfindung wird im Folgenden anhand von in den Figuren dargestellten Ausführungsbeispielen näher erläutert. Es zeigen:
- Fig. 1: eine schematische Darstellung der Gesamtvorrichtung zur Durchführung des Verfahrens,
- Fig. 2: eine Seitenansicht auf einen senkrechten Schnitt durch das Brechwerkzeug und eine an dieses angehängte Patrone für die Aufnahme des Schlauches,
- Fig. 3: eine Draufsicht auf einen waagerechten Schnitt durch das Brechwerkzeug,
- Fig.4: eine Seitenansicht auf einen senkrechten Schnitt durch das Brechwerkzeug und die Patrone sowie eine Vorrichtung zum Aufbringen eines rohrförmigen Abstandshalters auf das neue Rohr,
- Fig.5: eine Ansicht entsprechend Fig. 4 mit seilförmigem Abstandshalter und Zuführung des fließfähigen Materials über gesonderte Zuführschläuche, und
- Fig.6: eine Ansicht entsprechend Fig. 4 mit seilförmigem Abstandshalter und direkter Zuführung des fließfähigen Materials.

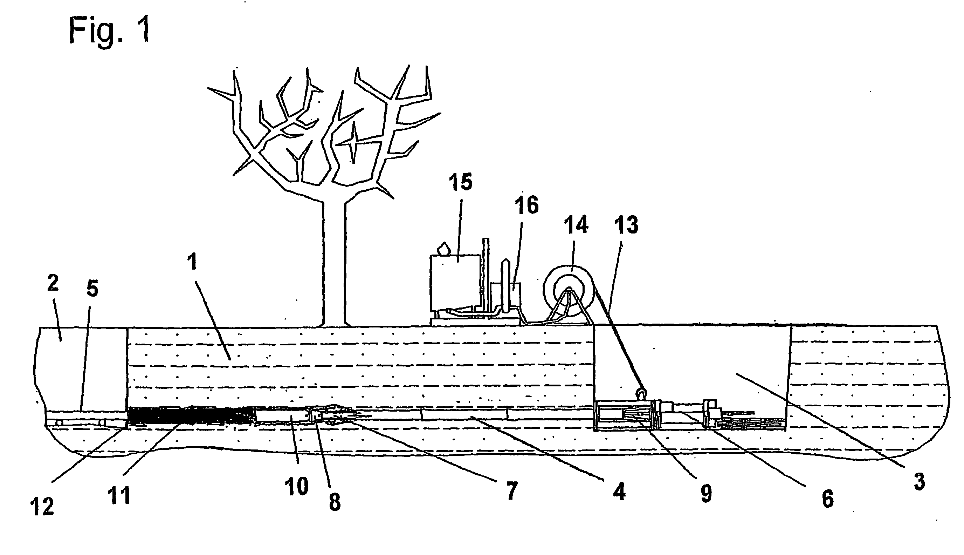

Die Vorrichtung nach Fig. 1 zeigt eine Rohrleitung, deren alte Rohre durch ein oder mehrere neue Rohre ersetzt werden sollen. Unterhalb eines Baumes soll dieses Auswechseln in geschlossener Bauweise erfolgen, d.h. nicht in einer offenen Baugrube, sondern zwischen einer Einziehbaugrube 2 und einer Zielbaugrube 3 durch das Erdreich 1 hindurch. Diese Baugruben ergeben sich bei einem auszuwechselnden Rohrleitungszug zwangsläufig an den Stellen, an denen Abgänge (Hausanschlüsse), Entnahmestellen (Hydranten) und Absperrorgane wieder angeschlossen bzw. ausgebaut werden müssen. Zwischen benachbarten Baugruben kann in der Regel von einem geradlinigen Verlauf der Rohrleitung ausgegangen werden.

Das Auswechseln erfolgt in der Weise, dass die alten Rohre 4 der Rohrleitung, die aus einem sprödbrechenden Material wie beispielsweise Grauguss bestehen, im Erdreich 1 zerbrochen und die Bruchstücke radial nach außen gedrückt werden und dann in den entstandenen Hohlraum das neue Rohr 5, das vorzugsweise aus einem Kunststoff wie PE besteht, einzogen wird. Dies findet in einem Arbeitsgang statt.

Zu Beginn der Auswechselungsarbeiten wird von der Einziehbaugrube 2 aus eine Zugstange durch die auszuwechselnden alten Rohre 4 zur Zielbaugrube 3 hin geschoben. Die Zugstange besteht in Längsrichtung aus mehreren Abschnitten, die in der Einziehbaugrube 2 miteinander verschraubt werden. Dies kann manuell oder mittels einer Vorrichtung erfolgen, die die einzelnen Stangenabschnitte automatisch von außerhalb der Einziehbaugrube 2 zuführt und miteinander verschraubt. Während des Einschiebens der Zugstange kann in der Zielbaugrube 3 eine Ziehvorrichtung 6 installiert werden.

Wenn das vordere Ende der Zugstange die Zielbaugrube 3 erreicht hat, wird dieses mit der Ziehvorrichtung 6 gekoppelt. Am hinteren Ende der Zugstange in der Einziehbaugrube 2 wird ein Brechwerkzeug 7 mit Aufweitkopf 8 befestigt. Dann wird die Zugstange von der Ziehvorrichtung 6 ein Stück gezogen, so dass das Brechwerkzeug 7 in das von der Einziehbaugrube 2 aus gesehen erste alte Rohr 4 gelangt und dieses zerbricht. Beim Ziehen stützt sich die Ziehvorrichtung 6 mit einem Rohrgegenlager 9 an dem in die Zielbaugrube 3 ragenden Ende des letzten alten Rohres 4 ab.

Bevor der Aufweitkopf 8 durch den Ziehvorgang die Einziehbaugrube 2 verlässt, wird an diesem eine Patrone 10 angeschraubt, die einen Schlauch 11 zieharmonikaförmig gefaltet enthält. Bevor die Patrone 10 die Einziehbaugrube 2 verlässt, wird in dieser an der Einzugsstelle eine den Durchtritt des neuen Rohres 5 gestattende Schleuse 12 angeordnet, an der das in Zugrichtung hintere Ende des Schlauches 11 dichtend befestigt wird.

Bevor dann die Patrone 10 die Einziehbaugrube 2 verlässt, wird an diese das neue Rohr 5 angehängt, so dass nun die Anordnung aus Brechwerkzeug 7, Aufweitkopf 8, Patrone 10 und neuem Rohr 5 gemeinsam zur Zielbaugrube 3 gezogen werden kann. Die Schleuse 12 dichtet den Zwischenraum zwischen dem neuen Rohr 5 und dem dieses umgebenden Schlauch 11 nach außen ab.

Der Ziehvorgang kann nun durchgeführt werden, wobei die Ziehvorrichtung 6 schrittweise arbeitet. Die vollständig in die Zielbaugrube 3 gelangten Abschnitte der Zugstange werden abgeschraubt und abgelegt; dies kann manuell oder automatisch erfolgen, wobei auch hier eine Fördervorrichtung vorgesehen sein kann, die die abgeschraubten Abschnitte aus der Zielbaugrube 3 herausbefördert.

Während des Ziehvorgangs werden die alten Rohre 4 nacheinander zerbrochen und der Aufweitkopf 8 drückt die Bruchstücke in das Erdreich 1 und weitet dieses etwas auf, so dass die Patrone 10 und das neue Rohr 5 problemlos nachgezogen werden können. Bei der Vorwärtsbewegung zur Zielbaugrube 3 hin wird der an der Schleuse 12 befestigte Schlauch 11 aus der Patrone 10 herausgezogen. Der Schlauch 11 hat vorzugsweise einen Außendurchmesser, der dem größten Durchmesser des Aufweitkopfes 8 nahe kommt, so dass er das neue Rohr 5 lose umgibt.

Gleichzeitig mit dem Schieben der Zugstange durch die alten Rohre 4 wird auch ein Füllschlauch 13, der an der Zugstange befestigt ist, hindurchgeschoben. Nachdem das vordere Ende der Zugstange in der Zielbaugrube 3 eingetroffen ist, wird das vordere Ende des Füllschlauchs 13 mit einer außerhalb der Zielbaugrube 3 angeordneten Schlauchwinde 14 verbunden. Die Schlauchwinde 14 ist mit einem Tank 15 für ein fließfähiges Material verbunden und besitzt eine Drehdurchführung in der Weise, dass das Material aus dem Tank 15 in den an der Schlauchwinde 14 befestigten und gegebenenfalls auf dieser aufgewickelten Füllschlauch 13 befördert werden kann. Zu diesem Zweck ist ein Pumpenaggregat 16 vorgesehen.

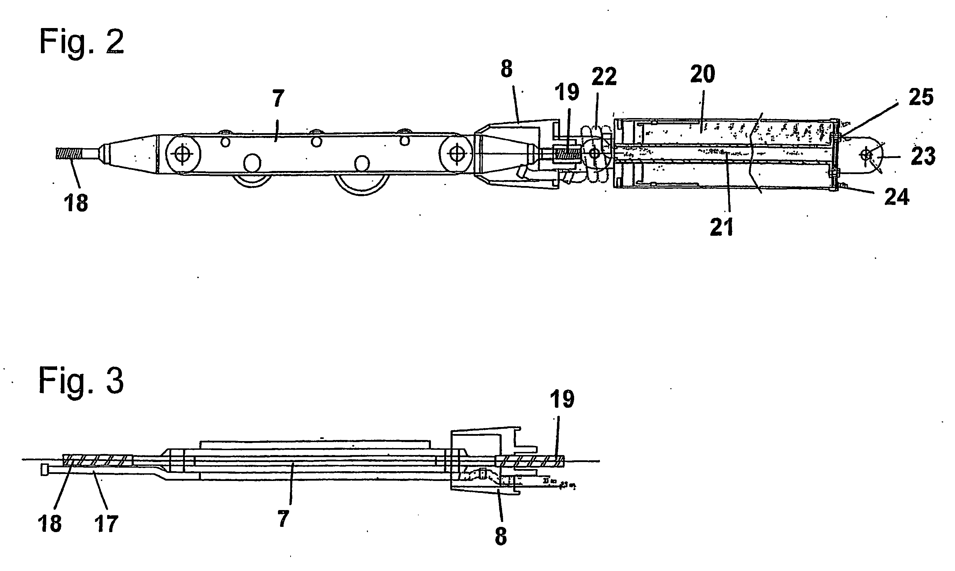

Das in Zugrichtung hintere Endes des Füllschlauches 13 wird am vorderen Ende des Brechwerkzeugs 7 mit einem an diesem befestigten und seitlich an diesem vorbeigeführten Rohr 17 verbunden (Fig. 3), bevor das Brechwerkzeug 7 in die Rohrleitung aus den alten Rohren 4 eingezogen wird. Das Brechwerkzeug 7 ist gemäß Fig. 2 am vorderen Ende mit einem Gewinde 18 für die Kopplung mit der Zugstange versehen. Es weist weiterhin Führungs- und Schneidräder auf, mit denen die alten Rohre 4 zerschnitten werden. Der am hinteren Ende des Brechwerkzeugs 7 angebrachte Aufweitkopf 8 drückt die durch die Zerschneiden entstandenen Bruchstücke in das Erdreich 1 und weitet dieses noch etwas auf.

Am hinteren Ende des Brechwerkzeugs 7 befindet sich ein weiteres Gewinde 19 für die Ankopplung der Patrone 10. Die Patrone enthält eine ringförmige Kammer 20 für die Aufnahme des gefalteten Schlauchs 11 sowie eine zentrale Durchführung 21. Wenn die Patrone 10 an das Brechwerkzeug 7 angekoppelt ist, werden das hintere Ende des Rohres 17 und das vordere Ende der Durchführung 21 durch eine Schlauchverbindung 22 miteinander verbunden. Am hinteren Ende der Patrone 10 befindet sich ein Ansatz 23, an dem eine Haltevorrichtung für das vordere Ende des neuen Rohres 5 befestigt wird. In der hinteren Stirnwand bzw. zwischen der zylindrischen Außenwand und der hinteren Stirnwand der Patrone 10 ist ein kreisförmiger Schlitz 24 vorgesehen, durch den der Schlauch 11 während des Zugvorgangs austritt. Die hintere Stirnwand der Patrone 10 enthält weiterhin eine oder mehrere Öffnungen 25, die mit der Durchführung 21 in Verbindung stehen und die in den Zwischenraum zwischen dem aus der Patrone herausgezogenen Schlauch 11 und dem an die Patrone 10 angehängten neuen Rohr 5 münden. Es besteht somit eine durchgehende Verbindung zwischen dem Tank 15 und diesem Zwischenraum, in den das im Tank 15 befindliche fließfähige Material gepumpt werden kann.

Da sich während des Ziehvorgangs der geschlossene Zwischenraum zwischen dem neuen Rohr 5 und dem Schlauch 11 verlängert, wird das fließfähige Material so zugeführt, dass der Zwischenraum stets mit diese Material gefüllt ist. Der Schlauch 11 wird dabei gegen das Erdreich 1 gedrückt. Auf der Außenseite des neuen Rohres 5 angeordnete Abstandshalter sorgen dafür, dass überall zwischen dem Rohr 5 und dem Schlauch 11 im Wesentlichen der gleiche Abstand besteht. Der Schlauch 11 besteht vorzugsweise aus einem Gewebe, das mit Kunststoff beschichtet oder unbeschichtet sein kann. Es muss so beschaffen sein, dass es für das fließfähige Material bei dem erforderlichen Verfülldruck nahezu undurchlässig ist. Da zwischen dem aus der Patrone 10 austretenden Teil des Schlauches 11 und dem umgebenden Erdreich 1 keine Relativbewegung stattfindet, besteht nicht die Gefahr, dass der Schlauch 11 durch etwaige Bruchstücke der alten Rohre 4 beschädigt wird. Durch das vorliegende Verfahren ist auch sichergestellt, dass das Erdreich 1 in jeder Phase des Auswechselungsvorgangs gestützt wird, so dass kein Einbruch des Erdreichs 1 erfolgen kann.

Der durch den Ziehvorgang in die Zielbaugrube 3 gezogene Teil des Füllschlauches 13 wird bei jedem Ziehschritt auf der Schlauchwinde 14 aufgewickelt.

Das fließfähige Material ist so beschaffen, dass es nach dem Eindringen in den Zwischenraum zwischen dem neuen Rohr 5 und dem Schlauch 11 abbindet oder aushärtet, bis es einen das Rohr 5 umgebenden Mantel mit zumindest stichfester Härte aufweist. Als geeignet erwiesen haben sich insbesondere eine Bentonitsuspension, gegebenenfalls mit einer Zementzugabe, zementgebundene Stützflüssigkeiten sowie auch Kunststoffe.

Der Schlauch 11 und auch das fließfähige Material nach dem Abbinden sollten so beschaffen sein, dass sie gas- und wasserdurchlässig sind. Dies ermöglicht bei einem Leck in einer gasführenden Rohrleitung die leichte Ortung des Lecks und verhindert das Auftreten von Gasansammlungen durch vagabundierende Gasströme, die ein hohes Gefahrenpotential darstellen können. Auch Schäden an Wasserrohrleitungen können auf diese Weise geortet werden.

Wenn am Ende des Ziehvorgangs auch das letzte alte Rohr 4 zerstört ist, kann sich die Ziehvorrichtung 6 nicht mehr an diesem abstützen. Die Abstützelemente des Rohrgegenlagers 9 werden dann auseinandergeklappt, so dass sie sich für die letzten Ziehschritte an der Wand der Zielbaugrube 3 abstützen können. Wenn das neue Rohr 5 in die Zielbaugrube 3 eingetreten ist, wird der Schlauch 11 nahezu flüssigkeitsdicht auf diesem abgeklemmt, bis das abbindbare Material ausreichend erhärtet ist.

Der Schlauch 11 kann auch aus einer Substanz bestehen oder diese enthalten oder eine Innenbeschichtung aus dieser Substanz aufweisen, die unter Einwirkung des zugeführten fließfähigen Materials irreversibel aufquillt und sich verfestigt, wodurch der das Rohr 5 umgebende Schutzmantel gebildet wird. Das fließfähige Material ist dann nicht selbst abbindbar oder aushärtbar, sondern nur eine Komponente von mindestens zwei den Schutzmantel bildenden Komponenten. Es ist besonders vorteilhaft, wenn das fließfähige Material Wasser ist, da hierdurch das Verfahren sehr vereinfacht wird.

Da beim Ziehvorgang die alten Rohre 4 zerbrochen werden, treten ruckartige Belastungen auf, die auch auf dem Füllschlauch 13 einwirken. Hierdurch besteht die Gefahr einer Beschädigung des Füllschlauchs 13 oder seiner Verbindungen. Diese Gefahr kann verringert werden, wenn der Füllschlauch 13 in regelmäßigen Abständen, beispielsweise einmal pro Zugstangenabschnitt, an der Zugstange befestigt wird.

Bei einem großen Abstand zwischen der Einziehbaugrube 2 und der Zielbaugrube 3 muss auch der Schlauch 11 eine entsprechende Länge aufweisen. Dies erfordert auch eine erhebliche Länge der Patrone 10, so dass bei beschränkten Abmessungen der Zielbaugrube 3 der Ausbau der Patrone 10 in dieser Schwierigkeiten bereiten kann. Andererseits ist die Patrone 10 leer, wenn sie in der Zielbaugrube 3 angekommen ist. Daher ist es zweckmäßig, die Patrone 10 aus mindestens zwei in ihrer Längsrichtung teleskopartig zusammenschiebbaren Teilen herzustellen, so dass sie in leerem Zustand erheblich verkürzt werden kann. Als Alternative kann die Patrone 10 aus mindestens zwei in ihrer Längsrichtung hintereinander angeordneten Segmenten bestehen, die lösbar miteinander verbunden sind, so dass sie für den Ausbau auseinander genommen werden kann.

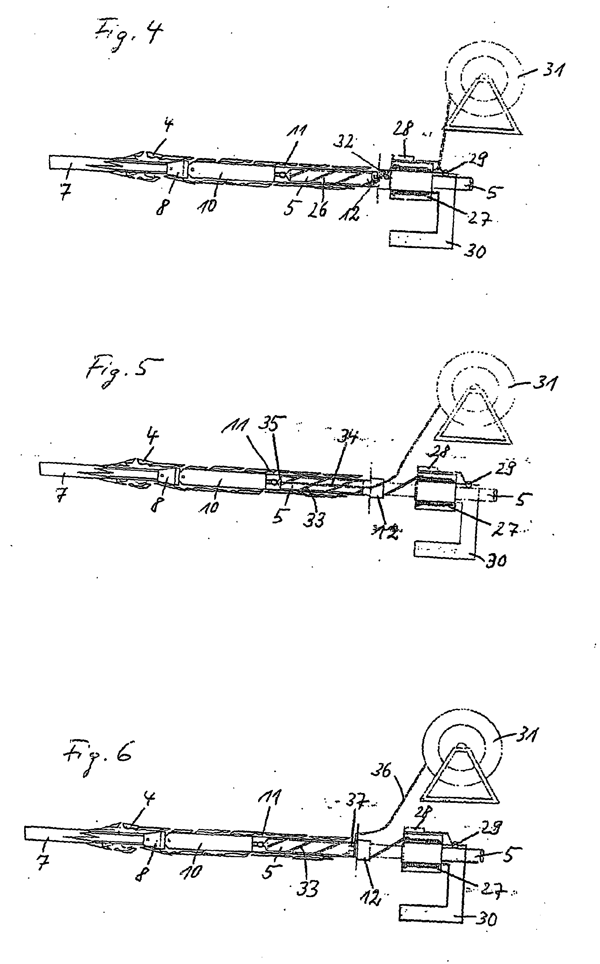

Figur 4 zeigt die Anordnung aus Brechwerkzeug 7, Aufweitkopf 8, Patrone 10 und dem vom Schlauch 11 umgebenen neuen Rohr 5. Zwischen dem Rohr 5 und dem Schlauch 11 ist wendelförmig ein Abstandshalter in Form eines druckfesten flexiblen Rohres 26 vorgesehen, dessen Durchmesser dem Abstand zwischen Rohr 5 und Schlauch 11 entspricht. Das Rohr 26 wird in der Einziehbaugrube 3 um das Rohr 5 herumgelegt, während dieses in das Erdreich 1 eingezogen wird. Hierzu ist das Rohr 26 auf eine um das Rohr 5 drehbare Spule 27 aufgewickelt. Zum Abwickeln des Rohres 26 von der Spule 27 wird diese von einem Elektro- oder Hydraulikmotor 28 angetrieben, der in Abhängigkeit von der Ziehgeschwindigkeit des Rohres 5 gesteuert wird. Hierzu ist ein die Ziehgeschwindigkeit erfassender Sensor 29 vorgesehen. Die Spule 27 wird von einem feststehenden Halter 30 so getragen, dass sie sich frei um das Rohr 5 drehen kann, während dieses durch die Spule 27 in das Erdreich 1 eingezogen wird. Die Geschwindigkeit des Motors 28 ist steuerbar, so dass die Steigung bzw. der Abstand der Windungen des Rohres 26 auf dem Rohr 5 beliebig einstellbar ist. Um einen möglichst gleichmäßigen Abstand zwischen dem Rohr 5 und dem Schlauch 11 zu erhalten, sollte die Steigung je nach den jeweiligen Gegebenheiten im Bereich zwischen 10 und 50 cm liegen.

Die Verwendung des Rohres 26 als Abstandshalter ermöglicht die Zuführung des fließfähigen Materials in den Zwischenraum zwischen Rohr 5 und Schlauch 11 von der Einziehbaugrube 2 aus. Der Füllschlauch 13, die Schlauchwinde 14, der Tank 15, das Pumpaggregat 16, das Rohr 17 und auch die Durchführung 21 können dadurch entfallen. Stattdessen ist ein Tank 31 mit integrierter Pumpe vorgesehen, der mit dem hinteren Ende des Rohres 26 verbunden ist und das fließfähige Material in dieses befördert. Auf der dem Schlauch 11 zugewandten Seite der abdichtenden Schleuse 12 befindet sich ein Lochermechanismus 32, der das Rohr 26 nach dessen Durchtritt durch die Schleuse 12 perforiert und somit den Austritt des Fließfähigen Mediums in den Zwischenraum zwischen Rohr 5 und Schlauch 11 ermöglicht.

Bei der in Figur 5 gezeigten Anordnung besteht der Abstandshalter zwischen Rohr 5 und Schlauch 11 nicht aus einem Rohr, sondern aus einem seilförmigen Element 33 wie einem Seil oder einer Kette. Die Zuführung des fließfähigen Materials erfolgt über zwei Zuführschläuche 34, deren jeweils vorderes Ende an dem vorderen Ende des neuen Rohres 5 befestigt ist, so dass die Zuführschläuche 34 mit dem Rohr 5 in das Erdreich 1 eingezogen werden. Die beiden Zuführschläuche befinden sich in gleicher Höhe auf der rechten und linken Seite des Rohres 5 zwischen diesem und dem Schlauch 11 und verlaufen unterhalb des wendelförmig um das Rohr 5 gewickelten Elements 33. Der Schlauch 11 hat daher an den Stellen, an denen die Zuführschläuche 34 und das Element 33 übereinander liegen, einen etwas größeren Abstand von Rohr 5 als in den anderen Bereichen.

Der Tank 31 ist in diesem Ausführungsbeispiel zusätzlich als Schlauchwinde ausgebildet, auf die die Zuführschläuche 34 aufgewickelt sind. Die Zuführschläuche 34 sind durch die Schleuse 12 geführt und werden entsprechend dem Vorschub des Rohres 5 von der Schlauch-Winde des Tanks 31 abgewickelt. Ihr jeweils vorderes Ende ist offen, so dass das fließfähige Material aus dem Tank 31 am vorderen Ende des Rohres 5 zwischen dieses und den Schlauch 11 befördert werden kann. Ein Verteiler 35 vor dem Ende des Rohres 5 bewirkt eine gleichmäßige Verteilung des Materials zwischen Rohr 5 und Schlauch 11.

Hat das vordere Ende des Rohres 5 die Zielbaugrube 3 erreicht, können die Zuführschläuche 34 von diesem gelöst und von der Schlauchwinde des Tanks 31 wieder zurückgezogen werden, wenn sich das fließfähige Material noch nicht verfestigt hat.

Bei dem Ausführungsbeispiel nach Figur 6 erfolgt die Zuführung des fließfähigen Materials vom Tank 31 in den Zwischenraum zwischen Rohr 5 und Schlauch 11 weder durch das als Abstandshalter dienende seilförmige Element 33 noch durch mit dem Rohr 5 mitgezogene Zuführschläuche, sondern über eine feststehende Schlauchverbindung 36, die über eine auf der dem Schlauch 11 zugewandten Seite der Schleuse 12 ausgebildete Öffnung den Tank 31 mit dem Zwischenraum zwischen Rohr 5 und Schlauch 11 verbindet. Ein ebenfalls auf dieser Seite der Schleuse 12 vorgesehener Verteiler 37 verteilt das Material in Umfangsrichtung des Rohres 5. Durch den Druck der Pumpe im Tank 31 und durch das um das Rohr 5 gewickelte seilförmige Element 33 wird das Material bei der Vorschubbewegung des Rohres 5 mit diesem mitgenommen.

## Patentansprüche

1. Verfahren zum Auswechseln im Erdreich (1) verlegter Rohre im Zuge einer Rohrleitung, bei dem im Bereich zwischen einer Einziehbaugrube (2) und einer Zielbaugrube (3) ein altes Rohr (4) aus sprödbrechendem Material von innen her zerbrochen und in das umgebende Erdreich (1) gedrückt und ein neues Rohr (5) an dessen Stelle eingezogen wird, indem durch eine gemeinsame Ziehvorrichtung (6) ein Brechwerkzeug (7) mit einem Aufweitkopf (8) und diesem nachfolgend das neue Rohr (5) aus der Einziehbaugrube (2) bis zur Zielbaugrube (3) gezogen werden, wobei gleichzeitig mit dem neuen Rohr (5) eine dieses umgebende Schutzhülle eingezogen wird,
**dadurch gekennzeichnet, dass** als Schützhülle ein Schlauch (11) verwendet wird und dass während des Ziehvorgangs der Zwischenraum zwischen der Außenwand des neuen Rohres (5) und der Innenwand des Schlauches (11) mit fließfähigem Material zur Bildung eines das neue Rohr (5) vor mechanischen Einwirkungen aus dem Erdreich (1) schützenden Mantels gefüllt wird.

2. Verfahren nach Anspruch 1, **dadurch gekennzeichnet, dass** das eine Ende des Schlauches (11) in der Einziehbaugrube (2) und das andere Ende des Schlauches (11) hinter dem Aufweitkopf (8) befestigt werden.

3. Verfahren nach Anspruch 1 oder 2, **dadurch gekennzeichnet, dass** der Schlauch (11) während des Ziehvorgangs von einem zwischen dem Aufweitkopf (8) und dem diesem zugewandten Ende des neuen Rohres (5) angeordneten Vorrat abgezogen wird.

4. Verfahren nach einem der Ansprüche 1 bis 3, **dadurch gekennzeichnet, dass** zum Ziehen des Brechwerkzeugs (7) und des neuen Rohres (5) eine Zugstange verwendet wird, die vor dem Zugvorgang von der Einziehbaugrube (2) zur Zielbaugrube (3) hin durch das zu zerbrechende Rohr (4) hindurchgeführt wird.

5. Verfahren nach einem der Ansprüche 1 bis 4, **dadurch gekennzeichnet, dass** das neue Rohr (5) ein Kunststoffrohr ist.

6. Verfahren nach einem der Ansprüche 1 bis 5, **dadurch gekennzeichnet, dass** das alte Rohr (4) ein Graugussrohr ist.

7. Verfahren nach einem der Ansprüche 3 bis 6, **dadurch gekennzeichnet, dass** der Schlauchvorrat in einer zwischen dem Aufweitkopf (8) und dem diesen zugewandten Ende des neuen Rohres (5) während des Ziehvorganges mitgeführten Patrone (10) aufbewahrt wird.

8. Verfahren nach Anspruch 7, **dadurch gekennzeichnet, dass** die Patrone (10) nach Entnahme des Schlauchvorrats für den Ausbau in der Zielbaugrube (3) teleskopartig zusammengeschoben oder in mindestens zwei Segmente zerlegt wird.

9. Verfahren nach einem der Ansprüche 1 bis 8, **dadurch gekennzeichnet, dass** das neue Rohr (5) auf der Außenseite Abstandshalter für einen weitgehend gleichmäßigen Abstand zu der Innenwand des Schlauches (11) trägt.

10. Verfahren nach Anspruch 9, **dadurch gekennzeichnet, dass** als Abstandshalter ein seilförmiges Element verwendet wird, das in der Einziehbaugrube (2) wendelförmig um das neue Rohr (5) gewickelt wird, während dieses in das Erdreich (1) gezogen wird.

11. Verfahren nach Anspruch 10, **dadurch gekennzeichnet, dass** die Steigung der Windungen des seilförmigen Elements im Bereich zwischen 10 und 50 cm eingestellt wird.

12. Verfahren nach Anspruch 10 oder 11, **dadurch gekennzeichnet, dass** das seilförmige Element zum Aufwickeln auf das neue Rohr (5) von einer Spule abgewickelt wird, die in Abhängigkeit von der Ziehgeschwindigkeit des neuen Rohrs (5) angetrieben wird.

13. Verfahren nach einem der Ansprüche 1 bis 12, **dadurch gekennzeichnet, dass** das fließfähige Material von der Zielbaugrube (3) aus zugeführt wird.

14. Verfahren nach Anspruch 13, **dadurch gekennzeichnet, dass** ein für die Zuführung des fließfähigen Materials verwendeter Füllschlauch (13) während des Ziehvorgangs zur Zielbaugrube (3) gezogen wird.

15. Verfahren nach Anspruch 14, **dadurch gekennzeichnet, dass** der in die Zielbaugrube (3) gezogene Teil des Füllschlauchs (13) aufgewickelt wird.

16. Verfahren nach Anspruch 15, **dadurch gekennzeichnet, dass** der Füllschlauch (13) auf einer Schlauchwinde (14) mit Drehdurchführung aufgewickelt wird.

17. Verfahren nach einem der Ansprüche 14 bis 16, **dadurch gekennzeichnet, dass** der Füllschlauch (13) mit der Zugstange durch das zu zerbrechende Rohr (4) geschoben wird.

18. Verfahren nach Anspruch 17, **dadurch gekennzeichnet, dass** der Füllschlauch (13) in in Ziehrichtung vorgegebenen Abständen an der Zugstange befestigt wird.

19. Verfahren nach einem der Ansprüche 1 bis 18, **dadurch gekennzeichnet, dass** als Schlauch (11) ein für das fließfähige Material nahezu dichter, jedoch gasdurchlässiger Gewebeschlauch verwendet wird.

20. Verfahren nach einem der Ansprüche 1 bis 20, **dadurch gekennzeichnet, dass** der vor mechanischen Einwirkungen schützende Mantel gas- und wasserdurchlässig ist.

21. Verfahren nach einem der Ansprüche 9 bis 12, **dadurch gekennzeichnet, dass** der Zwischenraum zwischen der Außenwand des neuen Rohres (5) und der Innenwand des Schlauches (11) gegenüber der Einziehbaugrube (2) abgedichtet wird und das fließfähige Material von der Einziehbaugrube (2) aus betrachtet unmittelbar hinter der Abdichtung (12) in den Zwischenraum eingeführt wird.

22. Verfahren nach einem der Ansprüche 9 bis 12, **dadurch gekennzeichnet, dass** am in Ziehrichtung vorderen Ende des neuen Rohres (5) auf zwei gegenüberliegenden Seiten Zuführschläuche befestigt und mit dem neuen Rohr (5) zwischen diesen und dem Schlauch (11) liegend in das Erdreich (1) eingezogen werden, und dass von der Einziehbaugrube (2) aus das fließfähig abbindbare Material durch die Zuführschläuche geleitet wird und an deren vorderen Enden in den Zwischenraum zwischen dem neuen Rohr (5) und dem Schlauch (11) austritt.

23. Verfahren nach Anspruch 22, **dadurch gekennzeichnet, dass** die Zuführschläuche nach Beendigung des Ziehvorgangs in die Einziehbaugrube (2) zurückgezogen werden.

24. Verfahren nach einem der Ansprüche 9 bis 12, **dadurch gekennzeichnet, dass** der Zwischenraum zwischen der Außenwand des neuen Rohres (5) und der Innenwand des Schlauches (11) gegenüber der Einziehbaugrube (2) abgedichtet wird und als Abstandshalter ein biegsames Rohr verwendet wird, das in der Einziehbaugrube (2) wendelförmig um das neue Rohr (5) gewickelt wird, und dass das fließfähig abbindbare Material durch das biegsame Rohr in den Zwischenraum zwischen dem neuen Rohr (5) und dem Schlauch (11) eingeführt wird, indem das biegsame Rohr nach dem Durchtritt durch die Abdichtung (12) perforiert wird.

25. Verfahren nach einem der Ansprüche 1 bis 24, **dadurch gekennzeichnet, dass** das fließfähige Material sich nach Beendigung des Ziehvorgangs durch Abbinden verfestigt.

26. Verfahren nach Anspruch 25, **dadurch gekennzeichnet, dass** das fließfähige Material eine Bentonitsuspension ist.

27. Verfahren nach einem der Ansprüche 25 oder 26, **dadurch gekennzeichnet, dass** das fließfähige Material eine zementgebundene Flüssigkeit ist.

28. Verfahren nach einem der Ansprüche 1 bis 20, **dadurch gekennzeichnet, dass** ein Schlauch (11) verwendet wird, der aus einer Substanz besteht oder eine Innenbeschichtung aus einer Substanz aufweist, die bei Zuführung des fließfähigen Materials irreversibel aufquillt und sich verfestigt.

29. Verfahren nach Anspruch 28, **dadurch gekennzeichnet, dass** das fließfähige Material Wasser ist.

## Claims

1. Method for replacing pipes located in the earth (1) as part of a pipeline, whereby an old pipe (4) consisting of a brittle breakable material is broken up from the inside in the area between a draw-in pit (2) and a target pit (3) and pressed into the surrounding earth (1), and a new pipe (5) is drawn in in its place in that a breaking tool (7) with a widening head (6) and, following the same, the new pipe (5) is pulled from the draw-in pit (2) to the target pit (3) by means of a common pulling means (6), whereby a protective sleeve surrounding the same is drawn in simultaneously with the new pipe (5), **characterised in that** a hose (11) is used as the protective sleeve, and **in that** the gap between the outer wall of the new pipe (5) and the inner wall of the hose (11) is filled with flowable material for forming a protective coat protecting the new pipe (5) against mechanical forces applied via the earth (1) during the pulling process.

2. Method according to Claim 1, **characterised in that** one end of the hose (11) is affixed in the draw-in pit (2), and the other end of the hose (11) affixed behind the widening head (8).

3. Method according to Claim 1 or 2, **characterised in that** the hose (11) is pulled off a store located between the widening head (8) and the end of the new pipe (5) facing the same during the pulling process.

4. Method according to one of the Claims 1 to 3, **characterised in that** a traction rod is used for pulling the breaking tool (7) and the new pipe (5), the same being inserted through the pipe (4) that is to be broken up from the draw-in pit (2) to the target pit (3) prior to the pulling process.

5. Method according to one of the Claims 1 to 4, **characterised in that** the new pipe (5) is a plastic pipe.

6. Method according to one of the Claims 1 to 5, **characterised in that** the old pipe (4) is a cast iron pipe.

7. Method according to one of the Claims 3 to 6, **characterised in that** the hose store is located within a cartridge (10) between the widening head (8) and the end of the new pipe (5) facing the same, and is transported along the line during the pulling process.

8. Method according to Claim 7, **characterised in that** the cartridge (10) is telescopically compressed following extraction of the stored hose for installation in the target pit (3), or is broken up into at least two segments.

9. Method according to one of the Claims 1 to 8, **characterised in that** the new pipe (5) comprises distancers on the outside for creating a substantially even distance to the inner wall of the hose (11).

10. Method according to Claim 9, **characterised in that** a rope-like element is used as a distancer, the same being helically wound around the new pipe (5) in the draw-in pit (2), whilst the same is pulled into the earth (1).

11. Method according to Claim 10, **characterised in that** the number of windings of the rope-like element is set in the area of between 10 and 50 cm.

12. Method according to Claim 10 or 11, **characterised in that** the rope-like element for winding onto the new pipe (5) is extracted from a coil which is driven relative to the pulling speed of the new pipe (5).

13. Method according to one of the Claims 1 to 12, **characterised in that** the flowable material is supplied via the target pit (3).

14. Method according to Claim 13, **characterised in that** a filling hose (13) is used for supplying the flowable material during the pulling process to the target pit (3).

15. Method according to Claim 14, **characterised in that** the part of the filling hose (13) pulled into the target pit (3) is wound up.

16. Method according to Claim 15, **characterised in that** the filling hose (13) is wound onto a hose coil (14) with rotation control.

17. Method according to one of the Claims 14 to 16, **characterised in that** the filling hose (13) is pushed through the pipe (4) that is to be broken up together with the traction rod.

18. Method according to Claim 17, **characterised in that** the filling hose (13) is affixed to the traction rod in drawing direction at pre-determined intervals.

19. Method according to one of the Claims 1 to 18, **characterised in that** an almost non-permeable, but gas permeable fabric hose is used as the hose (11) for the flowable material.

20. Method according to one of the Claims 1 to 20, **characterised in that** the coat protecting against mechanical forces is gas and water permeable.

21. Method according to one of the Claims 9 to 12, **characterised in that** the gap between the outer wall of the new pipe (5) and the inner wall of the hose (11) is sealed against the draw-in pit (2), and **in that** the flowable material is introduced into the gap directly behind the seal (12) when viewed from the direction of the draw-in pit (2).

22. Method according to one of the Claims 9 to 12, **characterised in that** supply hoses are affixed on opposite sides at the frontmost end of the new pipe (5) when viewed in pulling direction, and pulled into the earth (1) together with the new pipe (5) between the same and the hose (11), and **in that** the flowable material is supplied from the draw-in pit (2) through the supply hoses prior to drawing in the same, and **in that** at the same exits at the frontmost end into the gap between the new pipe (5) and the hose (11).

23. Method according to Claim 22, **characterised in that** the supply hoses are pulled back into the draw-in pit (2) following completion of the pulling process.

24. Method according to one of the Claims 9 to 12, **characterised in that** the gap between the outer wall of the new pipe (5) and the inner wall of the hose (11) is sealed against the draw-in pit (2), and **in that** a flexible pipe is used as a distancer, the same being helically wound around the new pipe (5) in the draw-in pit (2), and **in that** the flowable material can be tied off and is supplied through the flexible pipe into the gap between the new pipe (5) and the hose (11) **in that** the flexible pipe is perforated following insertion of the same through the seal (12).

25. Method according to one of the Claims 1 to 24, **characterised in that** the flowable material hardens following completion of the pulling process and after being tied off.

26. Method according to Claim 25, **characterised in that** the flowable material consists of a bentonite suspension.

27. Method according to one of the Claims 25 or 26, **characterised in that** the flowable material consists of a cement bound fluid.

28. Method according to one of the Claims 1 to 20, **characterised in that** a hose (11) is used, which consists of a substance or an inner coating made from a substance, which irreversibly swells and hardens when the flowable material is supplied.

29. Method according to Claim 28, **characterised in that** the flowable material is water.

## Revendications

1. Procédé pour le remplacement de tuyau posé dans la terre (1) dans le cadre d'une conduite, dans lequel un ancien tuyau (4) à base de matériau fragile et cassant est cassé par l'intérieur entre une fosse d'entrée (2) et une fosse cible (3) et enfoncé dans la terre environnante (1), et un nouveau tuyau (5) est introduit à sa place, opération pour laquelle un outil de cassure (7) avec une tête d'élargissement (8) et à la suite de cet outil le nouveau tuyau (5) sont tirés de la fosse d'entrée (2) jusqu'à la fosse cible (3) par un dispositif d'extraction (6) commun, sachant que, en même temps que le nouveau tuyau (5), une gaine de protection entourant ce tuyau est introduite,
**caractérisé en ce que**,
un flexible (11) est utilisé comme gaine de protection et **en ce que**, pendant l'opération de traction, l'espace intermédiaire entre la paroi extérieure du nouveau tuyau (5) et la paroi intérieure du flexible (11) est rempli avec du matériau fluide pour former une enveloppe protégeant le nouveau tuyau (5) des contraintes mécaniques provenant de la terre (1).

2. Procédé selon la revendication 1, **caractérisé en ce qu'**une extrémité du flexible (11) est fixée dans la fosse d'entrée (2) et l'autre extrémité du flexible (11) est fixée derrière la tête d'élargissement (8).

3. Procédé selon la revendication 1 ou 2, **caractérisé en ce que** le flexible (11) est retiré pendant l'opération d'extraction d'une réserve disposée entre la tête d'élargissement (8) et l'extrémité, tournée vers cette tête, du nouveau tuyau (5).

4. Procédé selon l'une quelconque des revendications 1 à 3, **caractérisé en ce que**, pour retirer l'outil de cassure (7) et le nouveau tuyau (5), on utilise une tige de traction qui est guidée avant l'opération de traction depuis la fosse d'entrée (2) en direction de la fosse cible (3) à travers le tuyau (4) à casser.

5. Procédé selon l'une quelconque des revendications 1 à 4, **caractérisé en ce que** le nouveau tuyau (5) est un tuyau plastique.

6. Procédé selon l'une quelconque des revendications 1 à 5, **caractérisé en ce que** l'ancien tuyau (4) est un tuyau en fonte grise.

7. Procédé selon l'une quelconque des revendications 3 à 6, **caractérisé en ce que** la réserve de flexible est conservée dans une cartouche (10) entraînée pendant l'opération de traction entre la tête d'élargissement (8) et l'extrémité, tournée vers celle-ci, du nouveau tuyau (5).

8. Procédé selon la revendication 7, **caractérisé en ce que** la cartouche (10) est repliée de façon télescopique après l'enlèvement de la réserve de flexible pour le démontage dans la fosse cible (3) ou bien est démontée en au moins deux segments.

9. Procédé selon l'une quelconque des revendications 1 à 8, **caractérisé en ce que** le nouveau tuyau (5) porte sur le côté extérieur des écarteurs pour une distance, uniforme en largeur, à la paroi intérieure du flexible (11).

10. Procédé selon la revendication 9, **caractérisé en ce que**, comme écarteur, on utilise un élément en forme de câble qui est enroulé dans la fosse d'entrée (2) en spirale autour du nouveau tuyau (5), alors que celui-ci est tiré dans la terre (1).

11. Procédé selon la revendication 10, **caractérisé en ce que** la pente des spires de l'élément en forme de câble est réglée dans un domaine compris entre 10 et 50 cm.

12. Procédé selon la revendication 10 ou 11, **caractérisé en ce que** l'élément en forme de câble est déroulé d'une bobine pour l'enroulement sur le nouveau tuyau (5), laquelle bobine est entraînée en fonction de la vitesse de traction du nouveau tuyau (5).

13. Procédé selon l'une quelconque des revendications 1 à 12, **caractérisé en ce que** le matériau fluide est amené à partir de la fosse cible (3).

14. Procédé selon la revendication 13, **caractérisé en ce qu'**un flexible de remplissage (13) utilisé pour l'arrivée du matériau fluide est tiré pendant l'opération de traction vers la fosse cible (3).

15. Procédé selon la revendication 14, **caractérisé en ce que** la partie, tirée dans la fosse cible (3), du flexible de remplissage (13) est enroulée.

16. Procédé selon la revendication 15, **caractérisé en ce que** le flexible de remplissage (13) est enroulé sur un treuil à flexible (14) avec passage tournant.

17. Procédé selon l'une quelconque des revendications 14 à 16, **caractérisé en ce que** le flexible de remplissage (13) est poussé avec la tige de traction à travers le tuyau (4) à casser.

18. Procédé selon la revendication 17, **caractérisé en ce que** le flexible de remplissage (13) est fixé sur la barre de fraction à des distances prédéfinies dans le sens de traction.

19. Procédé selon l'une quelconque des revendications 1 à 18, **caractérisé en ce que**, comme flexible (11), on utilise un flexible textile pratiquement étanche pour le matériau fluide, mais perméable au gaz.

20. Procédé selon l'une quelconque des revendications 1 à 20, **caractérisé en ce que** l'enveloppe protégeant des effets mécaniques est perméable au gaz et à l'eau.

21. Procédé selon l'une quelconque des revendications 9 à 12, **caractérisé en ce que** l'espace intermédiaire entre la paroi extérieure du nouveau tuyau (5) et la paroi intérieure du flexible (11) est rendu étanche par rapport à la fosse d'entrée (2) et le matériau fluide est introduit, vu depuis la fosse d'entrée (2), directement derrière le joint d'étanchéité (12) dans l'espace intermédiaire.

22. Procédé selon l'une quelconque des revendications 9 à 12, **caractérisé en ce que** des flexibles d'alimentation sont fixés sur l'extrémité antérieure dans le sens de traction du nouveau tuyau (5) sur deux côtés opposés et sont introduits avec le nouveau tuyau (5) entre ces flexibles et le flexible (11) en position couchée dans la terre (1) et **en ce que**, à partir de la fosse d'entrée (2), le matériau liable de façon fluide est guidé à travers les flexibles d'alimentation et sort sur leurs extrémités avant dans l'espace intermédiaire entre le nouveau tuyau (5) et le flexible (11).

23. Procédé selon la revendication 22, **caractérisé en ce que** les flexibles d'alimentation sont retirés dans la fosse d'entrée (2) après la fin de l'opération de traction.

24. Procédé selon l'une quelconque des revendications 9 à 12, **caractérisé en ce que** l'espace intermédiaire entre la paroi extérieure du nouveau tuyau (5) et la paroi intérieure du flexible (11) est rendu étanche par rapport à la fosse d'entrée (2) et **en ce qu'**on utilise comme écarteur un tuyau souple, qui est enroulé dans la fosse d'entrée (2) en spirale autour du nouveau tuyau (5), et **en ce que** le matériau liable de façon fluide est introduit par le tuyau souple dans l'espace intermédiaire entre le nouveau tuyau (5) et le flexible (11) du fait que le tuyau flexible est perforé après le passage par le joint d'étanchéité (12).

25. Procédé selon l'une quelconque des revendications 1 à 24, **caractérisé en ce que** le matériau fluide se solidifie après la fin de l'opération de traction par prise.

26. Procédé selon la revendication 25, **caractérisé en ce que** le matériau fluide est une suspension de bentonite.

27. Procédé selon l'une quelconque des revendications 25 ou 26, **caractérisé en ce que** le matériau fluide est un liquide lié au ciment.

28. Procédé selon l'une quelconque des revendications 1 à 20, **caractérisé en ce qu'**on utilise un flexible (11) qui est à base d'une substance ou présente un revêtement intérieur à base d'une substance qui gonfle de façon irréversible en cas d'arrivée du matériau fluide et se solidifie.

29. Procédé selon la revendication 28, **caractérisé en ce que** le matériau fluide est de l'eau.
